(19) Europäisches Patentamt

European Patent Office

Office européen des brevets

(11) **EP 1 087 331 A2**

(12) **EUROPEAN PATENT APPLICATION**

(43) Date of publication:
28.03.2001 Bulletin 2001/13

(51) Int. Cl.⁷: **G06K 19/06**

(21) Application number: **00308207.0**

(22) Date of filing: **20.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **21.09.1999 JP 26729799**

(71) Applicant: **SONY CORPORATION**
**Tokyo (JP)**

(72) Inventor:
**Nobuo Uda,**
**c/o Sony Corporation**
**Shinagawa-ku, Tokyo (JP)**

(74) Representative:
**Nicholls, Michael John**
**J.A. KEMP & CO.**
**14, South Square**
**Gray's Inn**
**London WC1R 5LX (GB)**

(54) **Information recording medium**

(57)  Visually handicapped persons become able to identify information recording medium of other kinds and recognize a difference such as a storage capacity between information recording mediums of the same kind by touching an information recording medium with ease. An IC recording media can be loaded into and ejected from a medium insertion slot and is detachably loaded onto a VTR having a built-in camera. This IC recording medium may include an information recording portion in which information is recorded and an outside case in which this information recording portion is housed. The outside case may include a label attachment concave portion. This label attachment concave portion may include identification protrusions which are used to distinguish this IC recording media from information recording mediums of other kinds. The identification protrusions may be formed at a height of less than the depth of the label attachment concave portion so as to be recognized by the sense of touch.

FIG. 1

EP 1 087 331 A2

## Description

The present invention relates to an IC recording media having a flash memory housed within a case, an MD (mini disc) having a optical magnetic disc housed within a cartridge, an FD (floppy disk) having a magnetic disk housed within a cartridge or a disk-like recording medium having an optical disk housed within a cartridge and other information recording mediums, and particularly to an information recording medium in which identification protrusions are formed on a concave portion formed on an outside case such as a case or a cartridge such that a user can identify the difference between the kinds of information recording medium and the storage capacities by touching the identification protrusions.

A video tape recorder having a built-in camera (hereinafter referred to as "a built-in camera type VTR"), for example, has hitherto been known as an apparatus for recording and/or reproducing an information signal on and/or from an information recording medium. It is customary that this built-in camera type VTR may use a cassette tape as an information recording medium. Users are able to reproduce video information at a suitable place such as a home after video image obtained when users had take a picture of person, scenery or the like was recorded on a magnetic tape housed within this tape cassette as an information signal.

Such built-in camera type VTR has expanded its function and improved its capacity by adding new functions and extending its shooting time as have other electronic devices. For example, the assignee of the present application has developed and supplied a commercially-available built-in camera type VTR in which a digital still camera function is added to a conventional built-in camera type VTR and a still pictures can be recorded on a new information recording medium with a digital still camera feeling in addition to the recording of moving pictures on a cassette tape.

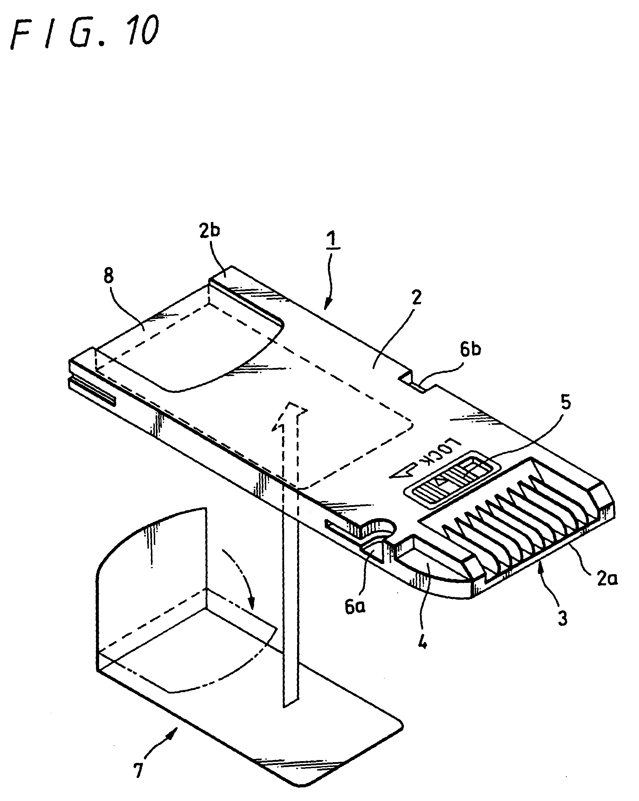

As this new information recording medium, the assignee of the present application has previously developed an IC recording media which might be called "memory stick" (trade mark). This IC recording media has an outside case serving as an information recording medium to house a flash memory, and has an outward appearance shown in FIG. 10.

That is, an IC recording media 1 has a thin and flat outside case 2 having approximately a rectangular shape. This outside case 2 has in its inside housed a memory having a large storage capacity. This outside case 2 has a tip end portion 2a which becomes a front side in the direction along which the outside case is inserted into the built-in camera type VTR and has at its approximately central portion of the tip end portion provided a terminal connection portion 3 having large numbers of connector pins exposed to one surface side. Connector pins of this terminal connection portion 3 may be electrically connected to terminals of a recording and reproducing apparatus entered into the outside case from the insertion front side when this recording media is inserted into the built-in camera type VTR. On one side of this terminal connection portion 3 is provided a recess portion 4 to prevent the IC recording media from being erroneously inserted into the recording and reproducing apparatus inadvertently.

A slide switch 5 serving as a mis-erase prevention mechanism may be disposed at the rear of the terminal connection portion 3 of the outside case 2 in order to prevent recorded information from being mis-erased. The surface of this slide switch 5 may be set within a concave portion so as to become substantially flush with the surface of the outside case 2, whereby no portions can be protruded from the surface of the outside case 2. This outside case 2 has at its two side surface portions provided recess portions 6a, 6b so as to properly position the IC recording media 1.

The outside case 2 has a base portion 2b serving as a grip portion on the rear side of the insertion direction and has a label attachment concave portion 8 to which a label is attached. When the label 7 is attached to the inside of the label attachment concave portion 8, the surface of the label 7 may become lower than the surface of the outside case 2, thereby preventing the surface of the label from being projected to the outside. This label attachment concave portion 8 may be extended from the rear portion of the back surface in which the slide switch 5 is provided to the surface through the back surface portion. This label attachment concave portion may be extended near the tip end portion 2a at its surface, thereby maintaining a large attachment surface.

However, in the above-mentioned IC recording media 1, since this IC recording media 1 is inserted into and ejected from the medium insertion slot and thereby detachably loaded into the recording and reproducing apparatus, there arises no problem when the concave portion is formed on the surface of the IC recording media 1 but a protruded portion such as a protrusion should not be desirable. If the IC recording media 1 includes such a protruded portion, then when the IC recording media 1 is inserted into and ejected from the recording and reproducing apparatus, there is then the risk that the protruded portion will hinder the IC recording media 1 from being inserted into and ejected from the recording and reproducing apparatus. For this reason, although the IC recording media 1 has the slit to house the terminal connection portion 3 and the through-hole to house therein the slide switch 5 or the concave portion such as the label area to which the label 7 is attached, it may not have the convex portion serving as the portion protruded from the surface of the outside case 2.

On the other hand, when a user can recognize the IC recording media 1 by the sense of sight, since a user can clearly recognize the shape, the design, the color or the like of the IC recording media 1 by the sense of sight, a user can relatively easily distinguish such recording media from information recording mediums of other kinds and also can identify a difference between information recording mediums of the same kind (e.g. difference of storage capacity, existence or absence of predetermined approval, etc.). However, those who are blind cannot identify information recording mediums and cannot recognize a difference by the sense of sight, those persons are able to recognize differences by other senses, and the sense of touch may be used generally. It is customary that back portions of finger nails are used to recognize something by the sense of touch. Visually handicapped persons are able to recognize the presence or absence of convex portions or concave portions by back portions of finger nails, e.g. those persons are able to read or write Braille or to recognize the floor level of an elevator by elevator level buttons.

However, since the above-mentioned IC recording media 1 is the thin and small card-like device, high protrusions or deep holes for identifying an article cannot be formed on the outside case 2. For this reason, the IC recording media 1 has never been identified by the sense of touch, and the IC recording media 1 is not provided with a means capable of identifying articles.

In view of the aforesaid aspect, it is an object of the present invention to provide an information recording medium in which even visually handicapped persons can distinguish a desired information recording medium from information recording mediums of other kinds by touching the desired information recording medium and can easily recognize a difference with respect to a storage capacity between information recording mediums of the same kind by touching the information recording mediums, thereby solving the above-mentioned problems.

In order to solve the above-mentioned problems and in order to attain the above-mentioned objects, an information recording medium claimed in claim 1 of the present invention is an information recording medium which is detachably loaded onto a recording and/or reproducing apparatus from a medium insertion slot. This information recording medium includes an information recording portion for recording information thereon and an outside case for housing this information recording portion therein. The outside case includes a concave portion, and this concave portion includes identification protrusions for enabling a user to distinguish this information recording medium from other kinds of information recording mediums. The identification protrusions have a height less than the depth of the concave portion and are formed so as to be recognizable by the sense of touch.

An information recording medium as claimed in claim 2 of the present invention is characterized in that the identification protrusions are formed with a space larger than 0.8 mm between it and an edge of the concave portion.

An information recording medium as claimed in claim 3 of the present invention is characterized in that the identification protrusions have a diameter of an upper surface or a length along a diagonal line, of larger than 0.8 mm.

An information recording medium as claimed in claim 4 of the present invention is characterized in that more than two identification protrusions are isolated from each other with a predetermined space and an identification function can be demonstrated by giving meaning to the number of identification protrusions.

According to the above-mentioned arrangement, in the information recording medium as claimed in claim 1 of the present invention, since the concave portion of the outside case in which the information recording portion is housed includes the identification protrusions having the height less than the depth of this concave portion and which can be recognized by the sense of touch, even visually handicapped persons can easily identify different kinds of information recording mediums and differences of storage capacity of the information recording mediums of the same kind by touching the information recording mediums. In addition, without changing the outside forms of existing products, it becomes possible for users to distinguish information recording mediums by the sense of touch.

In the information recording medium as claimed in claim 2 of the present invention, since the identification protrusions are formed with the space larger than 0.8 mm between it and the edge of the concave portion, a user can easily recognize the identification protrusions without mistaking the identification protrusions as burrs formed at the edge of the concave portion.

In the information recording medium as claimed in claim 3 of the present invention, since the diameter of the upper surface or the length along the diagonal line of the identification protrusion is made greater than 0.8 mm, a user can easily recognize the information recording medium by touching the identification protrusions.

In the information recording medium as claimed in claim 4 of the present invention, since more than two identification protrusions are arranged by giving meaning to the number of identification protrusions, a user can easily and reliably specify an information recording medium and recognize specific values of storage capacities or the like by touching the identification protrusions.

The present invention will be further described by way of example only, with reference to the accompanying drawings, in which:-

FIG. 1 is a perspective view showing an information recording medium according to an embodiment of the present invention, and illustrates an IC recording media viewed from the rear surface side;

FIG. 2 is a bottom view of the IC recording media shown in FIG. 1;

FIG. 3 is a plan view of the IC recording media shown in FIG. 1;

FIG. 4 is a perspective view illustrating an upper case of the IC recording media shown in FIG. 1 viewed from the rear surface side;

FIG. 5 is a perspective view illustrating a lower case of the IC recording media shown in FIG. 1 viewed from the front surface side;

FIG. 6 is an explanatory diagrams showing a relationship between an identification protrusion and an edge of a concave portion according to an information recording medium of the present invention, wherein A in the sheet of drawing is an explanatory diagram showing a case in which a space therebetween is proper and B in the sheet of drawing is an explanatory diagram showing a case in which a space therebetween is small;

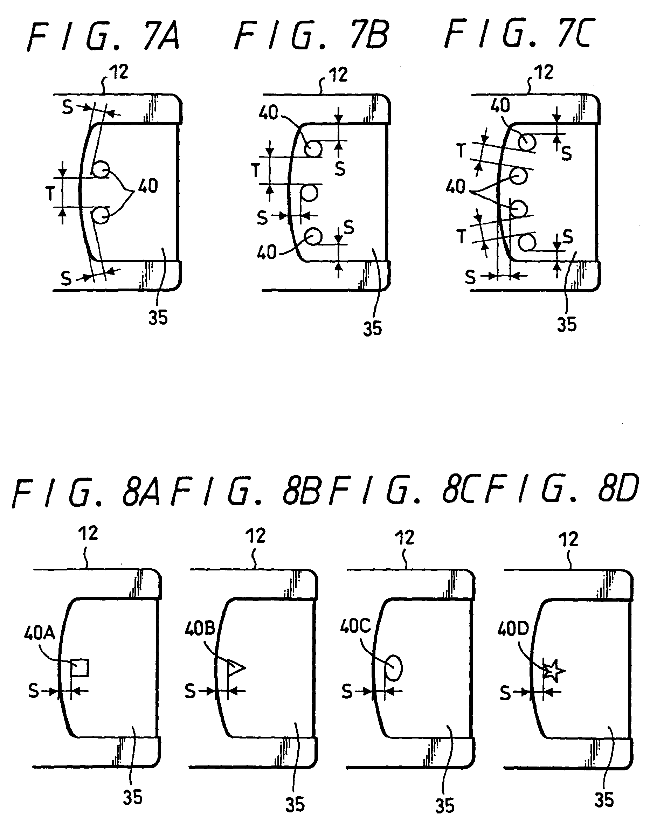

FIG. 7 is an explanatory diagrams showing a relationship between the number of identification protrusions and an edge of a concave portion according to an information recording medium of the present invention, wherein A in the sheet of drawing is an explanatory diagram showing a case in which there are provided two identification protrusions, B in the sheet of drawing is an explanatory diagram showing a case in which there are provided three identification protrusions and C in the sheet of drawing is an explanatory diagram showing a case in which there are provided four identification protrusions;

FIG. 8 is an explanatory diagrams showing other examples of plane shapes of identification protrusions according to an information recording medium of the present invention, wherein A in the sheet of drawing is an explanatory diagram showing a case in which the plane shape is triangular, B in the sheet of drawing is an explanatory diagram showing a case in which the plane shape is elliptic, and C in the sheet of drawing is an explanatory diagram showing a case in which the plane shape is star-like shape;

FIG. 9 is a perspective view showing an example of the present invention in which the information recording medium shown in FIG. 1 is applied to a built-in camera type VTR; and

FIG. 10 is a perspective view showing an information recording medium according to the prior art.

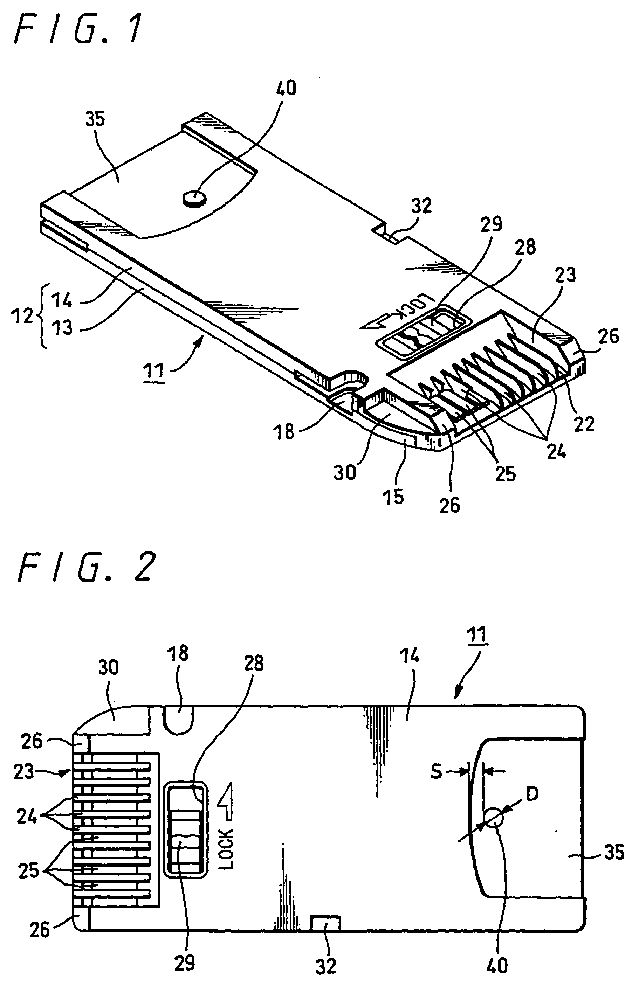

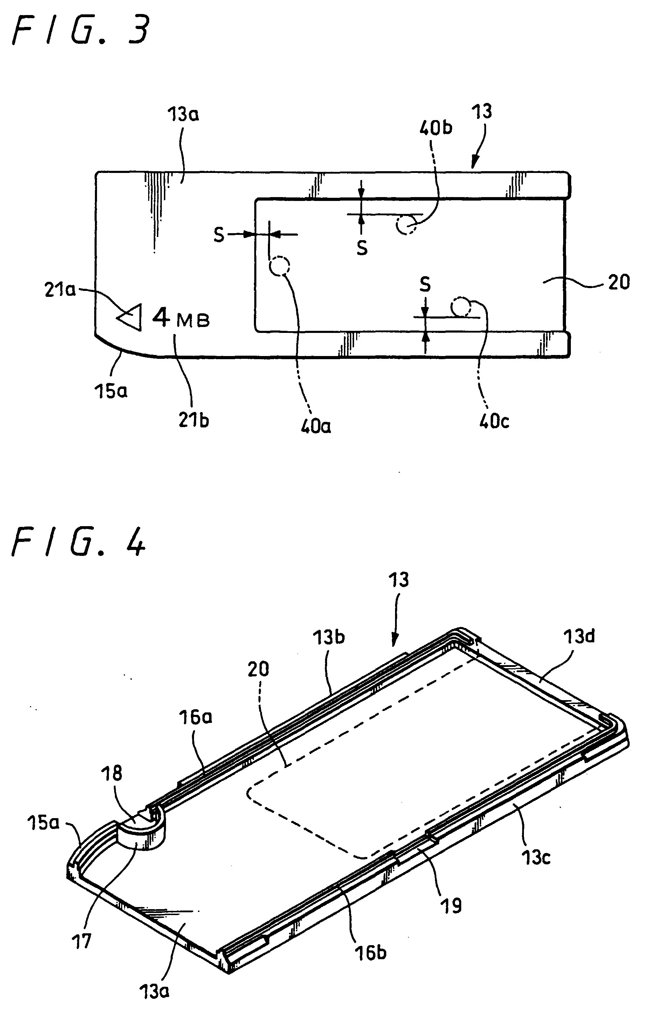

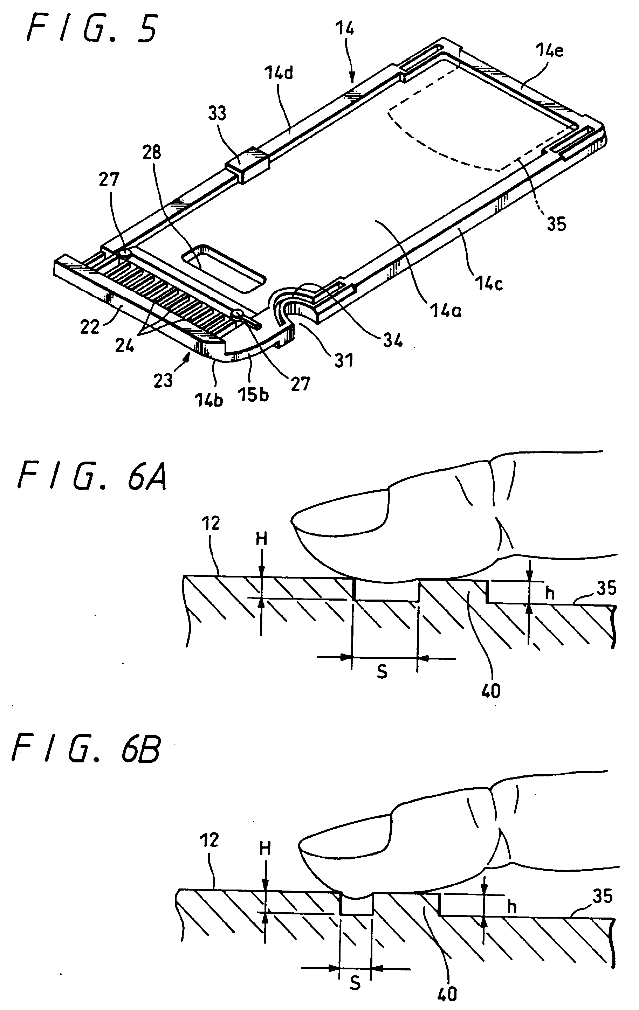

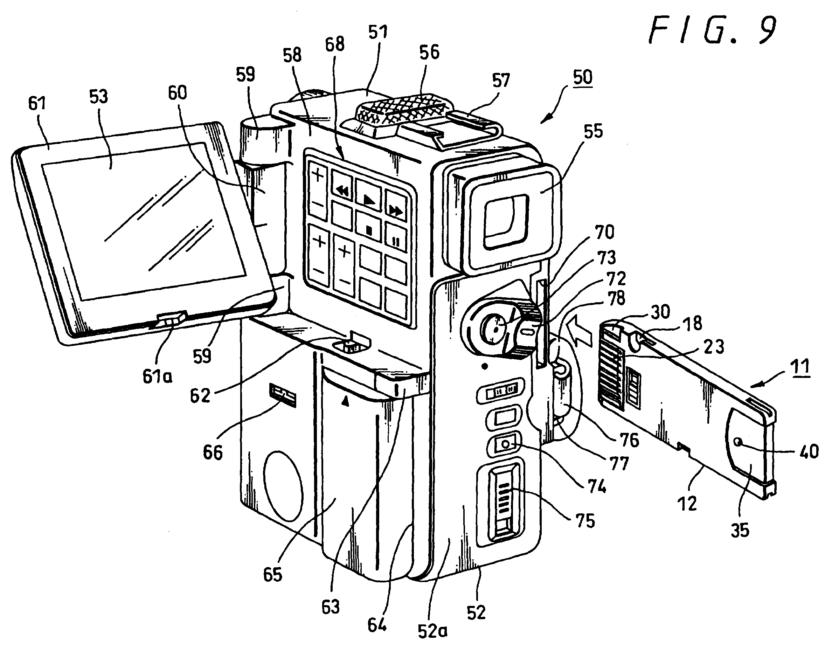

A mode for carrying out the invention will hereinafter be described with reference to the drawings. FIGS. 1 to 9 show an example of a mode for carrying out the invention wherein the present invention is applied to an IC recording media which might be called a "memory stick". FIG. 1 is a perspective view illustrating an IC recording media according to an embodiment of the present invention from the top portion of the rear surface. FIG. 2 is a bottom view thereof. FIG. 3 is a plan view thereof. FIG. 4 is a bottom view of an upper case according to the IC recording media of FIG. 1. FIG. 5 is a plan view of a lower case. FIGS. 6A, B are explanatory diagrams to which reference will be made in explaining a relationship between a space between an identification protrusion and an edge of a concave portion and the sense of touch of a back portion of a finger nail. FIGS. 7A to C are explanatory diagrams to which reference will be made in explaining a relationship between a space between an identification protrusion and an edge of a concave portion and the number of identification protrusions. FIGS. 8A to D are explanatory diagrams showing examples of shapes of identification protrusions. FIG. 9 is a perspective view showing an example in which an IC recording media according to the present invention is in use.

As shown in FIGS. 1 to 3, an IC recording media (memory stick) 11, which shows a specific example of an information recording medium, may include an outside case 12 comprised of a housing of a thin and flat rectangular-solid shape. This outside case 12 may house therein a flash memory having a large storage capacity serving as an information recording portion to record information thereon. This information recording portion is not limited to an IC memory such as a flash memory but other memories such as a core memory and a wire memory may be applied to this information recording portion.

The outside case 12 may comprise a pair of upper case 13 and a lower case 14 which may be integrated by being superposed each other in the upper to lower direction. As shown in FIGS. 3 and 4, the upper case 13 may comprise an upper surface portion 13a of an approximately rectangular shape, left and right side wall portions 13b, 13c continued to two long sides of this upper surface portion 13a and a rear wall portion 13d continued to one short side of the upper surface portion 13a. The left and right side wall portions 13b, 13c and the rear wall portion 13d may be protruded downwardly from the lower surface of the upper surface portion 13a, and an opening portion may be formed at the front surface. The front surface side of one side wall portion 13b may be curved into the inside, thereby forming an upper guide portion 15a which forms a portion of a guide 15.

Moreover, the upper case 13 may have the left and right side wall portions 13b, 13c having end faces on which connection protruded rail portions 16a, 16b continued in the longitudinal direction are formed respectively. The end portions of the protruded rail portions 16a, 16b are elongated toward the inside of the rear wall portion 13d, respectively, and thereby continued to the end face of the rear wall portion 13d. Further, the upper case 13 may have at its position near the upper guide portion 15a formed a positioning protrusion 17 for properly positioning the upper case and the lower case 14. This positioning protrusion 17 may be comprised of a semicircle cylinder having a semicircle cross-section opened toward the outside. This positioning protrusion 17 may have at its outside formed a space portion 18 which is U-shaped as seen from the above. One side wall portion 13b may have a recess to form this space portion 18. The other side wall portion 13c may have at its intermediate portion of the longitudinal direction formed an engagement groove 19.

This upper case 13 may have on an upper surface thereof provided a label attachment concave portion 20 to which is attached a label on which a user can freely write contents of information recorded on the memory and other items. This label attachment concave portion 20 shows a specific example of a concave portion which is provided in order not to make portions protruded from the surface of the outside case 12. This label attachment concave portion 20 is set to a depth of 0.175 mm in this embodiment. Accordingly, a thickness of a label attached to this label attachment concave portion should preferably be less than 0.175 mm.

This label attachment concave portion 20 may be extended up to the vicinity of the front surface of the upper case 13 by a predetermined width. The rear side of this label attachment concave portion 20 may be extended to the rearward and thereby continued up to the rear wall portion 13d. The upper case 13 may have at its front upper surface displayed an arrow 21a indicating the direction in which the IC recording media 11 should be inserted into the recording and reproducing apparatus and characters indicative of a storage capacity of an incorporated flash memory.

As shown in FIGS. 1, 2 and 5, the lower case 14 may comprise a lower surface portion 14a of approximately a rectangular shape, a front surface portion 14b continued to one short side of the longitudinal direction of this lower surface portion 14a, left and right side wall portions 14c, 14d continued to long sides and a rear wall portion 14e continued to other one short side of the lower surface portion 14a. The left and right side wall portions 14c, 14d and, the rear wall portion 14e may be protruded upwardly from the upper surface of the lower surface portion 14a. A portion ranging from the front portion of one side wall portion 14c to one side of the front surface portion 14b may be curved toward the inside, thereby forming a lower guide portion 15b which forms the remaining portion of the guide 15. There may be arranged the guide 15 having the common curved surface by superposing the upper guide portion 15a on the lower guide portion 15b. This guide 15 may be used in order to prevent the IC recording media 11 from erroneously inserted into electronic devices.

The front surface portion 14b of the lower case 14 may comprise a lid portion 22 for closing the front opening portion of the upper case 13 and a connection portion 23 for connecting the IC recording media 11 to the electronic device. The lid portion 22 may be extended along the width direction of the lower case 14, and the connection portion 23 may be set in the inside of the lid portion. As shown in FIG. 1, the connection portion 23 may be opened in the upper surface and in the front surface, and may be partitioned along the width direction at an approximately equal space by a plurality of partition members 24. A connector pin 25 may be disposed in each section provided by these partition members 24. Accordingly, a plurality of connector pins 25 may be arranged in the lateral direction, and their tip end portions may be exposed between the partition members 24.

These connector pins 25 may be respectively connected to terminals of a device body side inserted from the front when the IC recording media 11 is loaded onto the electronic device. In order to facilitate the connection between the terminals of the device body side and the connector pins, the tip end angle portions of the front surface of the lower case 14 may be chamfered to provide tapered portions 26. Further, tip end angle portions of the respective partition members 24 also may be chamfered to provide tapered portions.

As shown in FIG. 5, a pair of positioning pins 27, 27 may be provided at the rear of the partition members 24, 24 located at both ends of the width direction of a plurality of partitions members 24. The pair of positioning pins 27, 27 may be engaged with a pair of positioning holes defined on a printed wiring board, not shown. The positioning pins and the positioning holes are engaged with each other, whereby the printed wiring board may be properly positioned at a predetermined position and thereby housed into the outside case 12. The printed wiring board may have mounted thereon other electronic assemblies such as a memory, and an electrical circuit including this memory or the like may be electrically connected to a plurality of connector pins 25.

Further, the printed wiring board may have mounted thereon a mis-erase prevention device to prevent a mis-erasure of information recorded on the memory. In an opposing relation to this mis-erase prevention device, an operation window 28 may be formed on the lower surface portion 14a of the lower case 14 as shown in FIG. 5. This operation window 28 may have a slide switch 29 of the mis-erase prevention device housed such that the slide switch can slide along the width direction of the lower case 14 as shown in FIGS. 1 and 2. When this slide switch 29 is slid in the illustrated arrow direction, the mis-erase prevention device may be energized to prevent new information from being recorded (written) on the memory (state illustrated in FIG. 1). On the other hand, when the slide switch 29 is slid in the direction opposite to the illustrated arrow direction, the mis-erase prevention function may be canceled to enable new information to be recorded on the memory (state illustrated in FIG. 2).

Moreover, the front surface portion 14b of the lower case 13 may have at one side formed a recess portion 30 which is opened in the front and side directions. This recess portion 30 may be used to properly locate the IC recording media 11 at a predetermined position of a recording medium housing portion of an electronic device. When the IC recording medium is housed within the recording medium housing portion in the normal condition, the convex portion of the recording medium housing portion is engaged with the recess portion 30, thereby resulting in the IC recording media 11 being positioned properly. On the other hand, when the IC recording media 11 is mis-inserted inside out, for example, the convex portion of the recording medium housing portion is brought in contact with the tip end portion of the outside case 12, thereby preventing the recording media from being inserted into the predetermined position.

As shown in FIG. 5, one side wall portion 14c of the lower case 14 may have formed at its portion near the lower guide portion 15b a U-shaped concave recess portion 31. The other side wall portion 14d may have formed at its intermediate portion of the longitudinal direction a frame assembly portion 33 forming a concave recess portion 32 of a rectangular-solid shape. As shown in FIG. 1, the frame assembly portion 33 may be formed so as to surround other four surfaces other than the lower surface side and the side surface side, whereby the concave recess portion 32 may be formed so as to be opened to the lower surface side and the side surface side. The concave recess portion 31 may have formed at its inside a groove portion 34 of a semicircular shape which surrounds its bottom portion.

The positioning convex portion 17 of the semi-cylindrical shape may be engaged into the groove portion 34 of this lower case 14 and the engagement groove 19 may be engaged into the frame body portion 33, thereby resulting in the upper and lower cases 13, 14 being fastened together. The protruded rail portions 16a, 16b of the bonding surfaces may be fused to the upper and lower cases 13, 14 with the application of ultrasonic waves. Then, the upper and lower cases 13, 14 are bonded together by using the fused portions as an adhesive, thereby resulting in the outside case 12 being constructed integrally.

Incidentally, the bonding means of the upper and lower cases 13, 14 is not limited to this heat-fusing means, and the protruded rail portions 16a, 16b can be removed and an adhesive is coated on the bonding surface and the upper and lower cases 13, 14 may be integrally bonded by an adhesive force of this adhesive. Further, the upper and lower cases 13, 14 may be detachably assembled by not using the adhesive agent but by using a fixing means such as set screws.

A label attachment concave portion 35 which is continued to the label attachment concave portion 20 of the upper case 13 may be provided on the lower surface of the lower case 14. This label attachment concave portion 35 shows a specific example of a concave portion formed so as not to form a portion protruded from the surface of the outside case 12 likewise, and has a depth similar to that of the label attachment concave portion 20. This label attachment concave portion 35 is formed so as to occupy a proper area of the rear portion of the lower case 14 by a predetermined width as shown in FIGS. 1 and 2.

This label attachment concave portion 35 has at its portion near the front end edge provided identification protrusions 40 used to identify this IC recording media 11 from other kinds of recording media (e.g. products using different memories, products having different storage capacities, products made by different manufacturers, etc.). This identification protrusion 40 has a height of less than the depth of the label attachment concave portion 35, and is formed so as to be recognized by the sense of touch.

"To be recognized by the sense of touch" means that, when a user touches the identification protrusions 40, the user can recognize the existence of the identification protrusions 40 by the sense of touch. Here, man's cutaneous sensation will be described. According to "Body of the Japanese: Collections of health/body data" (written by Takao Suzuki, published by Asakura Publishing Co. Ltd.), in its "9.2 Cutaneous Sensation", sense spots (receptors) such as touch spot, hot spot, cold spot and pain spot relating to the surface sense (of the sense of body) are distributed on the skin and the mucous membrane. Average densities of such sense spots are such one that the average density of pain spot is 130/cm2, the average density of touch spot is 25/cm2, the average density of hot spot is 1.5/cm2 and the average density of cold spot is 13/cm2. The pain spot has the largest average density. The distribution density is high in the forearm and the thigh rather than the hand and the arm.

Of the above-mentioned sense spots, the sense points in which a user can recognize the height by the touch is the pain spot and the touch spot. Accordingly, the total number of available sense spots is 155/cm2 of the sum total of pain spot 130/cm2 and touch spot 25/cm2. Calculating this average pitch, we have:

$$10 \text{ mm} \times 155^{1/2} \fallingdotseq 0.803 \text{ mm}$$

Accordingly, there exist the pain spots or the touch spots at an interval of 0.8 mm. If the following conditions are satisfied on the premise of man's cutaneous sensation, then a user can recognize the existence of identification protrusions by the sense of touch.

The condition 1 describes a height of identification protrusions 40. As shown in FIG. 6A, a height h of identification protrusion 40 is selected to be under the depth H of the label attachment concave portion 35 (h ≤ H). To be concrete, the height h of the identification protrusion 40 should be selected to be 0.15 mm relative to the depth H = 0.175 mm of the label attachment concave portion 35. If the height of the identification protrusions is about the above-mentioned value, when a user touches the identification protrusions 40 with the hand, the user can recognize the existence of the identification protrusions 40. The lowest height of this identification protrusion 40 can be applied to the minimum value by which a user can recognize the identification protrusion when the user touches the identification protrusion 40.

The condition 2 describes the size and shape of the identification protrusion 40. With respect to the size of the identification protrusion 40, if the plane shape is circular, then its diameter D should be greater than 0.8 mm, and the most preferable value should be D = 2.0 mm. If the diameter D of the identification protrusion 40 is 20 mm, then since 9 pain spots or touch points exist within the area, a user can reliably recognize the existence of the identification protrusion 40. With respect to the plane shape of the identification protrusion 40, there can be enumerated a circle as a representing shape (FIG. 2, etc.). Shapes shown in FIGS. 8A to 8D can be applied to the plane shape of the identification protrusion.

An identification protrusion 40A shown in FIG. 8A is a square, an identification protrusion 40B shown in FIG. 8B is a triangle, an identification protrusion 40C shown in FIG. 8C is an ellipse, and an identification protrusion 40D shown in FIG. 8D is a star-shape. However, it is needless to say that a variety of shapes (e.g. hexagon, octagon, etc.) other than these shapes can be applied to the plane shape of the identification protrusion 40.

The condition 3 describes the position at which the identification protrusion 40 is set. The identification protrusion 40 should be located afar from the edge of the label attachment concave portion 35 with a predetermined distance S. The reason for this is that, if thee identification protrusion 4 is located too near the edge of the label attachment concave portion 35, then a user is made to mistake a burr as the identification protrusion by the sense of touch, and hence cannot recognize the identification protrusion 40 correctly. The distance S by which this identification protrusion 40 should be isolated from the edge of the label attachment concave portion 35 should be greater than 0.8 mm. This value of 0.8 mm was obtained from the above-mentioned man's skin sense, and a preferable value as the distance S should be 1.0 mm as shown in FIG. 6A.

If the distance S by which the identification protrusion should be isolated from the edge of the label attachment concave portion is greater than 0.8 mm, then the value of such distance can be changed freely. The condition in which the isolated distance S is greater than 0.8 mm is similarly applied to the identification protrusions 40A to 40D of the shapes shown in FIGS. 8A to D. If such identification protrusion 40 is provided on the label attachment concave portion 35 as described above, then a user can distinguish this IC recording media 11 from the information recording medium without identification protrusion 40 by the sense of sight. Thus, visually handicapped persons can identify the IC recording media 11, thereby making it possible to expand a range in which this kind of recording media can be used.

The identification based on this identification protrusion 40 can also be used in the following case. For example, it is possible to determine by the identification protrusion whether or not a product is a product corresponding to a copyright. That is, if the identification protrusion 40 is provided on the predetermined IC recording media 11, then it is possible to display that such product is an available product that is approved by a copyright holder. An available product upon approval by a copyright holder is the one which is equipped with a circuit having an approval function and an encryption function used to protect a copy right to information recorded, for example, on an inside flash memory and the like.

Also, if more than two identification products 40 are arranged with a predetermined distance as shown in FIGS. 7A to C, then this information recording medium can demonstrate a function for identifying it from other information recording medium by giving meaning to the number of the identification protrusions 40. For example, the number of the identification protrusions 40 can express the storage capacity and the difference of storage capacity of the IC recording media 11. Specifically, as shown in FIGS. 1 and 2, if the information recording medium has one identification protrusion 40, then this means that the storage capacity of the information recording medium is 4 MB (megabytes). Then, if the information recording medium has two identification protrusions 40 as shown in FIG. 7A, then this means that the storage capacity of the information recording medium is 8 MB. If the information recording medium has three identification protrusions 40 as shown in FIG. 7B, then this means that the storage capacity of the information recording medium is 16 MB. If the information recording medium has four identification protrusions 40 as shown in FIG. 7C, then this means that the storage capacity of the information recording medium is 32 MB.

In this case, a space T between one identification protrusion 40 and the adjacent identification protrusion 40 may be set to be equal to a space S between the edge of the label attachment concave portion 35 and the identification protrusion 40 ( T = S ) or the space T may be set to become larger than the space S (T > S). The reason for this is that, if the space T becomes narrower than the space S, then two protrusions are located too close so that they can be mistaken as one protrusion.

The above-mentioned identification protrusion 40 can be provided on the label attachment concave portion 20 of the upper case 13 as shown by a dots-and-dash line in FIG. 3. An identification protrusion 40a may be located near the front edge of the label attachment concave portion 20, and the space S may be set between it and the edge of the label attachment concave portion. Also, an identification protrusion 40b may be located near the upper edge of the label attachment concave portion 20, and an identification protrusion 40c may be located near the lower edge of the label attachment concave portion 20. The space S may be similarly set between these edges and the identification protrusions 40b, 40c.

Thus, if the existence of the identification protrusion 40 and the number of the identification protrusions are learned, then it is possible to identify the following things. Initially, it is possible to determine by the existence of the identification protrusion 40 whether or not the IC recording media 11 is a copyright-approved product (available product approved by the copyright holder). At that very moment, if the IC recording media 11 has the identification protrusion 40, then it is possible to learn that the recording media is the copyright-approved product. Then, by checking the number of the identification protrusions 40, if there is one identification protrusion 40, then it is possible to know that the storage capacity of the recording media is 4 MB. Thus, visually handicapped persons can execute the above-mentioned identifications by the sense of touch without being based on the sense of sight when they check the existence of the identification protrusion 40 by touching the identification protrusion on the IC recording media 11 and by counting the number of the identification protrusions.

As the material of the above-mentioned outside case 12, engineering plastics, for example, should be preferably used. However, as the material of the outside case 12, there can be used other metals such as a stainless steel.

The IC recording media 11 thus arranged may be for use with a VTR having a built-in camera 50 shown in FIG. 9, for example. This built-in camera type VTR 50 shows a specific example of a recording and/or reproducing apparatus, and may be arranged such that it can utilize two kinds of information recording mediums at the same time. That is, one of the information recording mediums is the IC recording media 11 and the other information recording medium is a cassette tape that is used to record image information.

As shown in FIG. 9, the built-in camera type VTR 50 may comprise a device body 51, a device lid 52 for opening and closing this device body 51 and which forms a part of the device body 51, a liquid-crystal monitor 53 serving as a display apparatus attached to the device body 51 such that its posture can be changed freely and the like. The device body 51 is comprised of an oblong housing of approximately rectangular shape. Mainly, a camera block may be housed in the upper portion of the device body 51 and a VTR block may be housed in its lower portion.

A lens portion of the camera block may be located on the upper portion of the device body 51 and one end of this lens portion may be served as an objective lens exposed to one surface side along the width direction of the device body 51. This device body 51 may have a color viewfinder 55 provided on its other surface of the width direction so as to be protruded in the lateral direction. The device body 51 may have on its upper surface attached a microphone 56 and an accessory shoe 57. Further, a monitor concave portion 58 may be provided on the upper portion of the device body 51 at its one side of the thickness direction. A pair of upper and lower monitor support portions 59, 59 may be provided on the monitor concave portion 58 at its objective lens side to support the liquid-crystal monitor 53 such that the liquid-crystal monitor can change its posture freely.

A coupling member 60 is supported by the pair of the monitor support portions 59, 59 at its both ends, whereby the coupling member 60 can be freely rotated in the horizontal direction of the device body 51. A monitor holder 61 may be pivoted relative to this coupling member 60 in a cantilever fashion, and the liquid-crystal monitor 53 may be attached to this monitor holder 61. Accordingly, the liquid-crystal monitor 53 can be freely rotated in the upper and lower direction of the coupling member 60 through the monitor holder 61. Owing to a coupling relationship between the monitor holder 61 and the coupling member 60 and the coupling member 60 and the device body 51, the liquid-crystal monitor 53 can freely change its posture in the upper and lower direction and in the right and left direction.

The monitor holder 61 may have on its lower portion provided a pin reception portion 61a. When a lock pin 62 of a lock mechanism is engaged with this pin reception portion 61a, the monitor holder 61 can be locked under the state that the liquid-crystal monitor 53 is housed into the monitor concave portion 58. The locking operation of the monitor holder 61 and its releasing operation done by the lock pin 62 may be executed by operating a lock releasing button 63 held on the device body 51. The device body 51 may have a battery compartment portion 64 provided at the lower portion of the lock pin 62. A battery pack 65 which can be used repeatedly by charging is detachably attached to the battery compartment portion 64. Further, the device body 51 may have at its side of the battery compartment portion 64 bored a speaker through-hole 66. A speaker may be incorporated in the inside of this speaker through-hole 66.

This device body 51 may have at its lower portion incorporated a mechanical deck portion of the VTR block, though not shown. The device body 51 may have on its lower portion formed an opening portion to expose the upper surface and front surface of this mechanical deck portion. This opening portion can be freely opened and closed by the device lid 52. A VTR circuit portion may be attached to the mechanical deck portion, and the mechanical deck portion may be fixed to the inner surface of the device body 51 whiich serves as a frame portion Operation buttons 68 for operating this mechanical deck portion may be disposed on the side surface of the monitor concave portion 58. Then, a camera circuit portion, a photoelectric conversion portion and the like may be disposed in the inside of the operation buttons 68.

The device lid 52 may be rotatably coupled to this device body 51 by a coupling means such as a hinge. This device lid 52 is rotated in unison with the operation of the cassette holder of the mechanical deck portion. As the opening portion of the device body 51 is opened by opening the device lid 52, the cassette holder of the mechanical deck portion is moved to open its cassette insertion slot. Thus, the tape cassette can be loaded onto the cassette holder and the tape cassette previously loaded onto the cassette holder can be ejected.

The device lid 52 which opens and closes the opening portion of the device body 51 as described above may comprise a side surface portion, not shown, for covering the side surface side of the opening portion of the device body 51 and a rear surface portion 52a for covering the rear surface side of the opening portion as well. The whole of the device lid may be shaped as an L-letter as seen from the top. This device lid 52 may have at its rear surface portion 52a defined a medium insertion slot 70 to and from which the IC recording media 11 is inserted and ejected. This medium insertion slot 70 may be formed of a rectangular opening which is extended in the upper and lower direction. A recording medium compartment portion to which the IC recording media 11 is detachably attached may be provided at the inside of the medium insertion slot. Then, though not shown, the device lid 52 may have at its side surface portion provided an eject button for ejecting the IC recording media 11 from the recording medium compartment portion.

Also, the device lid 51 may have at its rear surface portion 52a rotatably disposed a mode change-over switch 72 located in the lateral direction, and a recording button 73 may be attached to the center portion of the rotation of the mode change-over switch. Then, a picture display button 74 may be disposed under the mode change-over switch 72. An eject button 75 of the device lid 22 may be disposed under the picture display button 74. When this eject button 75 is slid in the lower direction to release the locked state of the lid lock mechanism, the device lid 52 can be opened to open the cassette insertion slot of the mechanical deck portion.

Reference numeral 76 in FIG. 9 depicts a fixing belt. One end of this fixing belt 76 may be fixed to the device lid 52 through a metal latch 77. The other end of this fixing belt 76 may be fixed to the device body 21 through a metal latch, not shown. This fixing belt 76 may be extended through a grip cover 78, and this grip cover 78 and the fixing belt 76 may constitute a grip belt.

The IC recording media 11 is inserted into or ejected from the built-in camera type VTR 50 thus arranged and used to record or reproduce information as follows. When the IC recording media 11 is loaded onto the recording medium compartment portion, as shown in FIG. 9, the IC recording media 11 is inserted into the medium insertion slot 70 in the normal state. Specifically, while the connection portion 23 side is being opposed to the inside, the tip end portion with the recess portion 30 is made to face the medium insertion slot 70. Then, the IC recording media 11 is inserted into the recording medium insertion slot 70 from its tip end portion and further moved to a predetermined position, whereby the IC recording media 11 can be loaded on the recording medium compartment portion.

Thus, it becomes possible to write a new information signal on the IC recording media 11. Besides, it becomes possible to read a previously-recorded information signal from the recording media. As a consequence, the built-in camera-type VTR compatible with the IC recording media (memory stick) 11 is able to record large numbers of still pictures. Moreover, by using a memory stick PC card adapter, it is possible to store still picture data recorded on the IC recording media 11 in a personal computer.

As set forth above, the present invention is not limited to the above-mentioned embodiment. For example, while the example of the information recording medium in which the IC recording media called the memory stick (trade mark) is used as the information recording medium and the identification protrusion 40 is provided on the label attachment concave portion 20 has been described so far in the above-mentioned embodiment, the present invention can be applied to other kinds of information recording mediums, e.g. information recording mediums such as a memory card, a floppy disk (FD) and a mini disc (MD) which can be used in the same manner as the memory stick and which have a concave portion for a label to be attached thereinto. Further, while the identification protrusion 40 is provided on the label attachment concave portion 20 or 35 as described so far in the above-mentioned embodiment, the present invention is not limited thereto and can be modified in such a manner that a concave portion is provided at the peripheral edge of the slide switch 29 and an identification protrusion is formed within this concave portion.

Moreover, while the built-in camera type VTR is applied to the present invention as the recording and/or reproducing apparatus as described so far in the above-mentioned embodiment, it is needless to say that the present invention can be applied to various kinds of electronic devices such as an electronic still camera, an electronic book player, a digital photo printer, a color video printer and a personal computer as long as an electronic device includes a recording and/or reproducing apparatus. As set forth above, the present invention can be modified variously without departing from a gist thereof.

As set forth above, according to the information recording medium claimed in claim 1 of the present invention, since the outside case into which the information recording portion is housed has the concave portion and the identification protrusion of height smaller than the depth of this concave portion can be recognized by the sense of touch, visually handicapped persons can easily identify a difference in the kinds of information recording mediums and a difference in storage capacities among the same kind of the information recording mediums by touching the information recording mediums. In addition, there can be achieved the effect that the information recording medium which can be identified by the sense of touch can be supplied without modifying the outside shape of ready-made product.

According to the information recording medium claimed in claim 2 of the present invention, since the identification protrusion is isolated from the edge of the concave portion by the space greater than 0.8 mm, a user can be prevented from mistaking this identification protrusion as burrs formed at the edge of the concave portion. Thus, there can be achieved the effect that a user can identify the information recording medium with ease.

According to the information recording medium claimed in claim 3 of the present invention, since the diameter of the upper surface or the length of the diagonal line direction of the identification protrusion is made greater than 0.8 mm, there can be achieved the effect that it is possible to provide the information recording medium that a user can easily recognize by touching the identification protrusion owing to the sense of touch.

According to the information recording medium claimed in claim 4 of the present invention, since more than two identification protrusions are arranged by giving meaning to the number of identification protrusions, there can be achieved the effect that it is possible to provide the information recording medium in which a user can specify the information recording medium and recognize the concrete value of the storage capacity of the information recording medium by touching the identification protrusions owing to the sense of touch reliably and easily.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

**Claims**

1. An information recording medium which can be detachably loaded on a recording and/or reproducing apparatus, wherein

   said information recording medium includes an information recording portion for recording information thereon, an outside case for housing therein said information recording portion, and

   said outside case is provided with a concave portion and said concave portion is provided with identification protrusions for identifying the kind of said information recording medium and said identification protrusions have a height less than a depth of said concave portion and which are formed so as to be recognized by the sense of touch.

2. An information recording medium as claimed in claim 1, wherein said identification protrusion is located with a space larger than 0.8 mm between it and an edge of said concave portion.

3. An information recording medium as claimed in claim 1 or 2, wherein said identification protrusion has a diameter of an upper surface or a length along a diagonal line equal to or no less than 0.8 mm.

4. An information recording medium as claimed in any one of the preceding claims, wherein more than two of said identification protrusions are isolated from each other by a predetermined space therebetween and identification is performed according to the number of said identification protrusions.

5. An information recording medium as claimed in any one of the preceding claims, wherein said outside case is constituted by an upper case and a lower case and said concave portion is continuingly formed in a predetermined width from said upper case to said lower case.

6. An information recording medium as claimed in any one of the preceding claims, wherein the depth of said concave portion is approximately 0. 175mm and the height of said identification protrusions is 0. 15mm.

7. An information recording medium as claimed in any one of the preceding claims, wherein said identification protrusions are provided a space of approximately 1. 0mm apart from the edge of said concave portion.

8. An information recording medium as claimed in any one of the preceding claims, wherein the diameter of the upper surface or the length thereof in a diagonal direction is 2.0mm.

9. An information recording medium as claimed in any one of the preceding claims, wherein said identification protrusions indicate the presence or absence of a copy right protecting function.

10. An information recording medium as claimed in any one of the preceding claims, wherein the number of said identification protrusions indicates a storage capacity of said information recording medium.

11. An information recording medium as claimed, in any one of the preceding claims, wherein a space between adjacent identification protrusions is equal to or not less than a space between said identification protrusions and the edge of said concave portion.

12. An information recording medium as claimed in any one of the preceding claims, which is used by being inserted into or ejected from a medium insertion slit of said recording and/or reproducing apparatus.

# F I G. 1

# F I G. 2

# FIG. 3

13a
40b
13
S
S
21a
S
4 MB
20
40a
40c
21b
15a

# FIG. 4

13
13b
13d
20
16a
18
15a
17
13c
19
16b
13a

FIG. 5

FIG. 6A

FIG. 6B

# F I G. 7A    F I G. 7B    F I G. 7C

# F I G. 8A F I G. 8B F I G. 8C F I G. 8D

FIG. 9

EP 1 087 331 A2

# F I G. 10